# EUROPEAN PATENT APPLICATION

(11) **EP 2 324 692 A1**
(43) Date of publication of application: **25.05.2011**
(21) Application number: 09176968.7
(22) Date of filing: 24.11.2009
(51) Int. Cl.: A01B 59/041

(54) **Lateral stabilizer for lower arms of three-point hitches of an agricultural machine**

(71) Applicant: ARIES S.r.l., 06019 Umbertide (IT)
(72) Inventor: Minelli, Mauro, 06080, COLOMBELLA (IT); Leandri, Francesco, 06017, SELCI (IT)
(74) Representative: Jorio, Paolo

(57) **Abstract**

A lateral stabilizer for lower arms of three-point hitches of an agricultural machine is defined by a sleeve (2) and by a bar (5), which are slidingly coupled to one another, and axially locked to one another by means of first and second coupling means (27, 21), which are borne by the sleeve (2) and, respectively, by the bar (5), are reciprocally movable between a locking position and an unhooking position, and are entirely housed inside said sleeve (2).

## Description

The present invention relates to a self-centering lateral stabilizer for lower arms of three-point hitches of an agricultural machine.

In the agricultural machinery sector, to control the operation of a lower arm of a three-point hitch of an agricultural machine the use is known of a lateral stabilizer of the type comprising a sleeve having a given longitudinal axis, a bar mounted coaxially with and coupled slidingly to said sleeve, and a locking device to axially lock the sleeve and the bar to each other.

Generally, the locking device comprises two diametrically opposed teeth which project radially outwards from a portion of the bar outside the sleeve, and a locking member, which is substantially U-shaped having the concavity facing the sleeve, extends outside the sleeve, is limited laterally by two substantially parallel walls, each provided with a respective recess shaped and arranged so as to receive a relative tooth, and pivotally coupled to the sleeve so as to rotate, with respect to said sleeve, about a fulcrum axis substantially transversal with respect to said longitudinal axis.

The locking member is movable from a position in which the teeth are locked in the relative recesses to an unhooking position upon shifting of the lateral stabilizer from a raised resting position to a lowered working position, and is movable from the unhooking position to the locking position upon shifting of the lateral stabilizer from the lowered working position to the raised resting position.

The prior art lateral stabilizers of the type described above have some drawbacks mainly deriving from the fact that, when the lateral stabilizer is in the lowered working position and the locking member is in the unhooking position, earth, dust, mud and/or dirt can easily build up inside the locking member and around the teeth preventing the locking member from moving from its unhooking position to its locking position and thus undermining the correct locking of the lateral stabilizer in its raised resting position.

It is an object of the present invention to provide a self-centering lateral stabilizer for lower arms of three-point hitches for an agricultural machine that overcomes the drawbacks described above and is simple and inexpensive to produce.

According to the present invention there is provided a self-centering lateral stabilizer for lower arms of three-point hitches of an agricultural machine as set forth in the appended claims.

The present invention will now be described with reference to the accompanying drawings, which illustrate a non-limiting embodiment thereof, in which:
figure 1 is a schematic perspective view of a preferred embodiment of the lateral stabilizer of the present invention;
figure 2 is a longitudinal cross-section, with some parts removed for the sake of clarity, of the lateral stabilizer of figure 1;
figure 3 is a side view, with parts shown in cross-section and parts removed for the sake of clarity, of the lateral stabilizer of figure 1; and
figure 4 is a perspective view of a detail of figures 1, 2, and 3.

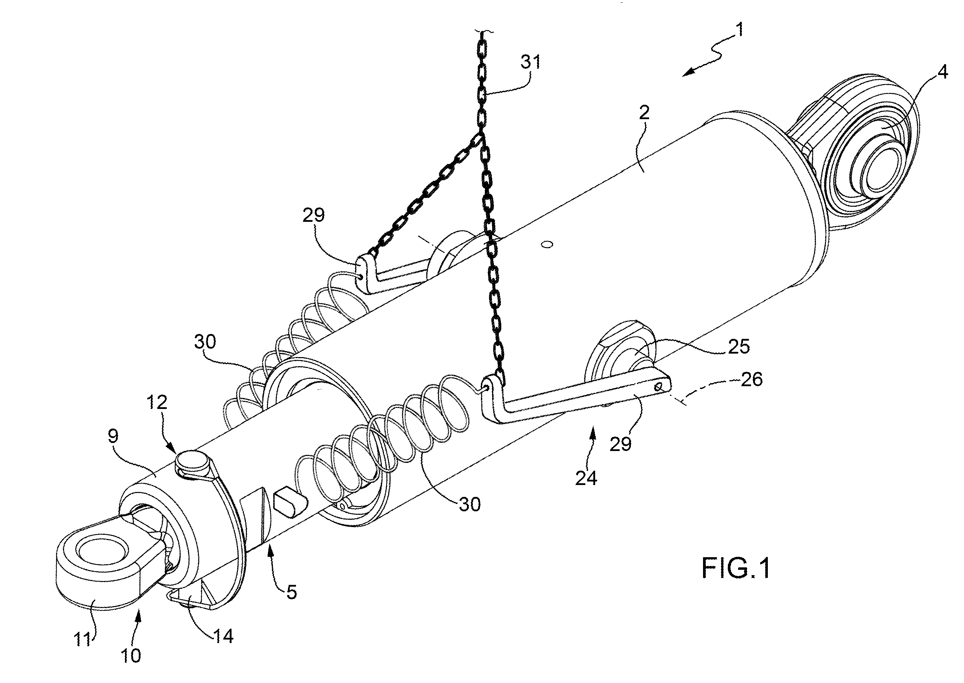

With reference to figures 1, 2, and 3, designated as a whole by number 1 is a lateral stabilizer for lower arms of three-point hitches (not illustrated) of an agricultural machine (not illustrated).

The stabilizer 1 comprises a sleeve 2, which has a longitudinal axis 3, is provided, at a first end thereof, with a ball joint 4 for coupling with a frame (not illustrated) of said agricultural machine (not illustrated), and is slidingly engaged by a cylindrical bar 5, which extends inside the sleeve 2 coaxially with the axis 3, and protrudes outside the sleeve 2 through a second end of said sleeve 2 opposite the first end.

The bar 5 comprises a first pin 6 having a wide portion 7 substantially contained inside the sleeve 2 and a narrow portion 8 protruding out from said sleeve 2; a coupling 9 screwed onto the portion 8; and a second pin 10, which is mounted inside the coupling 9, is provided with a hooking section 11 which protrudes out from the coupling 9 to allow coupling of the stabilizer 1 with a lower arm of a three-point hitch (not illustrated), and is slidingly coupled to said coupling 9.

The coupling 9 and the pin 10 are axially locked with respect to each other by means of a locking device 12 comprising, in this embodiment, two radial coupling holes 13, which are obtained through the coupling 9 and the pin 10 transversely with respect to the axis 3, are aligned with respect to one another along said axis 3, and are suitable to be engaged by a lock pin 14.

From the above description it is apparent that the length of the stabilizer 1 can be selectively controlled both by screwing the coupling 9 on the pin 6 and by locking the pin 10 on said coupling 9.

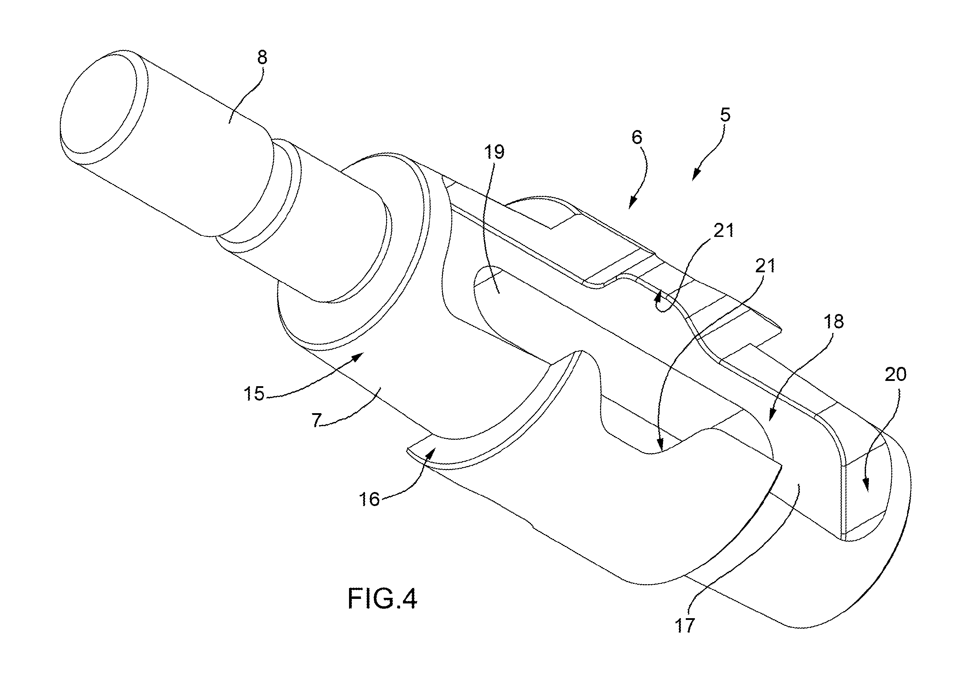

According to that illustrated in figure 4, the wide portion 7 of the pin 6 is externally limited by a cylindrical stepped surface 15 defining a central shoulder 16 coaxial with the axis 3, and is provided with two elongated diametrically opposed cavities 17, which open outwards in correspondence with the surface 15, extend parallel to the axis 3, and are limited by respective base walls 18 connected to one another by means of an elongated central slot 19, which is obtained radially through the portion 7 and extends parallel to the axis 3.

Each cavity 17 is also limited by a side wall 20, which extends around the slot 19, and is provided, in correspondence with the shoulder 16, with two shaped portions 21, which are substantially U-shaped, are axially staggered one with respect to the other, and are entirely housed within the sleeve 2.

The bar 5 is slidingly coupled to the sleeve 2 by means of the interposition of a damping device 22 comprising, in this embodiment, two springs 23, each of which is mounted on the bar 5 coaxially with the axis 3, and extends between the shoulder 16 and a relative end of said sleeve 2.

The sleeve 2 and the bar 5 are axially locked to each other by means of a locking device 24 comprising a support shaft 25, which has a longitudinal axis 26 transversal with respect to the axis 3, extends through the cavity 17 and the slot 19, protrudes with its free ends out from the sleeve 2, is slidingly engaged in the slot 19, and is rotatingly coupled to the sleeve 2 so as to rotate, with respect to said sleeve 2 and as described more fully below, about said axis 26.

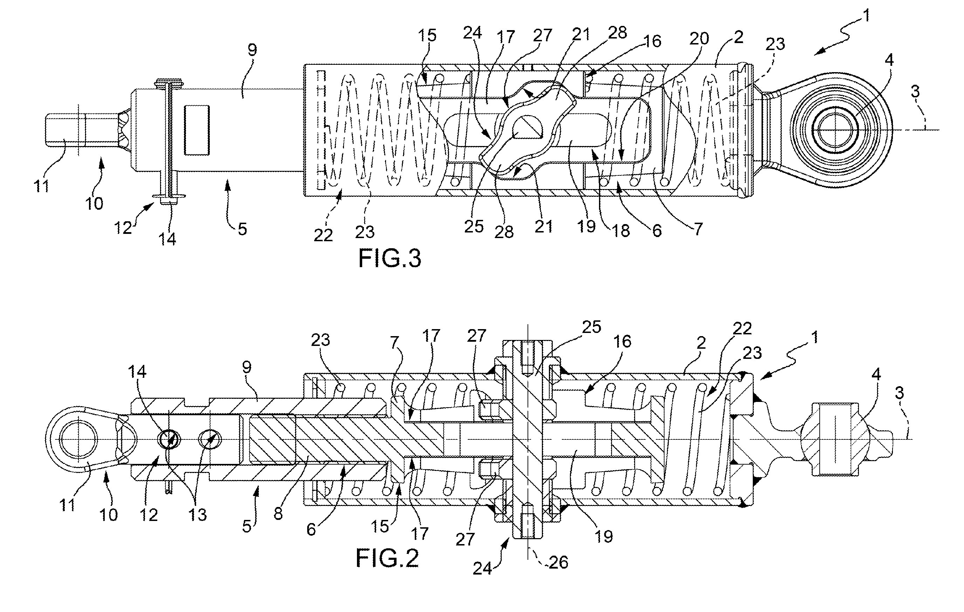

The shaft 25 supports, in this embodiment, two rocker arms 27, each of which is housed inside a relative cavity 17, extends inside the sleeve 2, is angularly coupled and axially fixed to the shaft 25, is provided with two arms 28, and is movable about the axis 26 between a locking position (figure 3), in which the arms 28 engage the shaped portions 21 of the relative cavity 17, and an unhooking position (not illustrated) in which the arms 28 release said portions 21.

The shaft 25 also supports two brackets 29, each of which is fixed to a free end of the shaft 25 outside the sleeve 2, is coupled to the coupling 9 of the bar 5 by means of the interposition of a spring 30, and is, moreover, coupled in a known way to said frame (not illustrated) of the agricultural machine (not illustrated) by means of the interposition, in this embodiment, of a chain 31.

According to an alternative embodiment that is not illustrated, the springs 30 are eliminated and replaced with at least one torsion spring, which is mounted on the shaft 25 coaxially with the axis 26, and also in this case enables the elastic pre-loading of said shaft 25.

In use, when the three-point hitch (not illustrated) and, thus, the stabilizer 1 are arranged in a raised resting position, the sleeve 2 and the bar 5 are axially locked to one another by the rocker arms 27 engaging the shaped portions 21 of the relative cavities 17.

Upon shifting of the three-point hitch (not illustrated) and, thus, of the stabilizer 1 from the raised resting position to a lowered working position, the assembly defined by the sleeve 2 and by the bar 5 rotates about the joint 4 in an anti-clockwise direction in figure 1, the assembly defined by the shaft 25, the rocker arms 27, and the brackets 29 rotates about the axis 26 in a clockwise direction in figure 1, and the rocker arms 27 disengage the shaped portions 21 against the action of the springs 30 to allow the sleeve 2 and the bar 5 to shift axially with respect to one another.

In contrast, upon shifting of the three-point hitch (not illustrated) and, thus, of the stabilizer 1 from the lowered working position to the raised resting position, the assembly defined by the sleeve 2 and by the bar 5 rotates about the joint 4 in a clockwise direction in figure 1, the assembly defined by the shaft 25, the rocker arms 27, and the brackets 29 rotates about the axis 26 in an anti-clockwise direction in figure 1, and the rocker arms 27 engage the shaped portions 21 against the action of the springs 30 to axially lock the sleeve 2 and the bar 5 with respect to one another.

Since the shaped portions 21 and the rocker arms 27 are entirely housed within the sleeve 2, the correct operation of the locking device 24 and, thus, the correct locking of the stabilizer 1 in its raised resting position cannot be undermined by earth, dust, mud and/or dirt.

Clearly, according to an alternative embodiment that is not illustrated, the rocker arms 27 could be eliminated and replaced with ordinary cranks mounted on the shaft 25.

## Claims

1. A self-centering lateral stabilizer for lower arms of three-point hitches of an agricultural machine, the lateral stabilizer comprising a sleeve (2) having a given longitudinal axis (3); a bar (5) mounted coaxially to the sleeve (2) and slidingly coupled to the sleeve (2); and a locking device (24) to axially lock the sleeve (2) and the bar (5) to each other, the locking device (24) comprising first and second coupling means (27, 21), which are carried by the sleeve (2) and, respectively, by the bar (5), and are reciprocally movable between a locking position and an unhooking position; and being **characterized in that** the first and second coupling means (27, 21) are entirely housed within the sleeve (2).

2. The lateral stabilizer according to claim 1, wherein the first coupling means (27) comprise at least one hooking member (27) and the second coupling means (21) comprise at least one seat (21) obtained on the bar (5) and suitable to couple with the hooking member (27) upon shifting of the lateral stabilizer from a lowered working position to a raised resting position.

3. The lateral stabilizer according to claim 2, wherein the hooking member (27) is coupled in a rotatable and axially fixed manner to the sleeve (2) to shift, with respect to the sleeve (2), from the locking position to the unhooking position upon shifting of the lateral stabilizer from the raised resting position to the lowered working position and to shift from the unhooking position to the locking position upon shifting of the lateral stabilizer from the lowered working position to the raised resting position.

4. The lateral stabilizer according to any of the preceding claims, wherein the first coupling means (27) comprise at least one rocker arm (27), which is coupled in a rotatable and axially fixed manner to the sleeve (2) to rotate about a rotation axis (26) substantially transversal to said longitudinal axis (3), and has two arms (28); the second coupling means (21) comprising, for each rocker arm (27), two seats (21) obtained on the bar (5) and suitable to couple with the arms (28) of the rocker arm (27).

5. The lateral stabilizer according to claim 4, wherein the two seats (21) are axially staggered one with respect to the other along said longitudinal axis (3).

6. The lateral stabilizer according to claim 4 or 5, wherein the locking device (24) further comprises a support shaft (25), which extends through the sleeve (2) and the bar (5) to rotate about said rotation axis (26), and bears said rocker arm (27) connected thereto; the bar (5) having a slot (19), which is radially obtained through the bar (5), extends parallelly to said longitudinal axis (3) and is slidingly engaged by the support shaft (25).

7. The lateral stabilizer according to claim 6, wherein said first coupling means (27) comprise two of said rocker arms (27) mounted on the support shaft (25) on opposite sides of the bar (5).

8. The lateral stabilizer according to any of the preceding claims further comprising elastic means (30) to shift and normally maintain the first and second coupling means (27, 21) in said locking position.

9. The lateral stabilizer according to any of the preceding claims further comprising a damping device (22) interposed between the sleeve (2) and the bar (5).

10. The lateral stabilizer according to any of the preceding claims, wherein the bar (5) comprises two portions (9, 10) slidingly coupled one to the other, has at least two coupling holes (13) obtained radially through the two portions (9, 10) and distributed along said longitudinal axis (3), and is provided with a pin element (14) suitable to engage said coupling holes (13) to selectively control a length of said lateral stabilizer.

11. The lateral stabilizer according to any of the preceding claims, wherein the sleeve (2) and the bar (5) are connected one to a frame of the agricultural machine and the other to a lower arm of a three-point hitch.
